# EUROPÄISCHE PATENTANMELDUNG

(11) **EP 2 181 662 A2**
(43) Veröffentlichungstag der Anmeldung: **05.05.2010**
(21) Anmeldenummer: 09013096.4
(22) Anmeldetag: 16.10.2009
(51) Int. Cl.: A61C 1/08, A61B 1/24

(54) **Lichtabstrahleinrichtung und Antriebsvorrichtung mit einer Leuchtdiode**

(30) Priorität: 31.10.2008 DE 102008054196
(71) Anmelder: SycoTec GmbH & Co. KG, 88299 Leutkirch im Allgäu (DE)
(72) Erfinder: Werner, Dieter, 88299 Leutkirch (DE); Mack, Karl, 88299 Leutkirch (DE); Gruber, Helmut, 87740 Buxheim (DE)
(74) Vertreter: Schulz, Manfred

(57) **Zusammenfassung**

Eine Lichtabstrahleinrichtung für einen Antrieb medizinischer Instrumente und/oder Handstücke beinhaltet eine aus zumindest einer ersten Schicht und zumindest einer zweiten Schicht bestehende Trägereinrichtung; und eine an einer in eine Lichtabstrahlrichtung weisenden Oberfläche der Trägereinrichtung angleordnete Leuchtdiode; wobei die zumindest eine erste Schicht der Trägereinrichtung eine Leiterschicht zur Zufuhr von Energie zu der Leuchtdiode beinhaltet; und die zumindest eine zweite Schickt der Trägereinrichtung eine Wärmeableitschicht zur Ableitung von Abstrahlungswärme der Leuchtdiode beinhaltet.

## Beschreibung

Die Erfindung betrifft eine Lichtabstrahleinrichtung und eine Antriebsvorrichtung mit einer Leuchtdiode, und bezieht sich insbesondere auf medizinische, insbesondere dentalmedizinische, Lichtabstrahleinrichtungen und Antriebe von medizinischen/dental-medizinischen Instrumenten, Werkzeugen und Handstücken, welche eine Leuchtdiode zur Beleuchtung des Arbeitsbereichs der Instrumente und Handstücke aufweisen.

Bekannt sind Antriebe auf dem Gebiet der Medizin und der Dentalmedizin, etwa Motoren, welche in einem Gehäuse angeordnet sind und ein über eine Kupplungseinrichtung an das Gehäuse gekoppeltes medizinisches oder dentalmedizinisches Instrument, Werkzeug oder Handstück bzw. Winkelhandstück antreiben. In solchen Gehäusen kann in ebenfalls bekannter Weise eine (auch als Hochdrucklampe bezeichnete) Halogen-Glühlampe zur Beleuchtung des Arbeits- oder Anwendungsbereichs des Instruments, Werkzeugs oder Handstücks integriert sein. Derartige Glühlampen sind dabei vorwiegend in einem Sockel in dem Gehäuse und meist auswechselbar mit entsprechenden losen Kontakten angeordnet.

Nachteilig bei dieser bekannten Lösung einer Glühlampe in einem medizinischen/dentalmedizinischen Antrieb ist zum Einen, dass durch die physikalisch bedingte hohe Abstrahlungsleistung der Glühlampe an unmittelbar benachbarten Gehäuseabschnitten sehr hohe Temperaturen, so genannte Hot-Spots, an einer Bedien- bzw. Griffoberfläche auftreten, welche für einen das Gehäuse in der Hand haltenden Benutzer unangenehm sind und die Verwendungsdauer des Instruments, Werkzeugs oder Handstücks in einer bestimmten Haltelage der Hand beschränken.

Bei den bekannten Antrieben ist deshalb ein hoher konstruktiver Aufwand erforderlich, um die Oberflächentemperatur des Gehäuses zumindest in dem Bedien- oder Griffbereich zu senken und in einem für den Benutzer erträglichen und/oder zulässigen Bereich zu halten.

Hierzu wurden beispielsweise Lösungen wie etwa die Anordnung zusätzlicher Kühlluftbohrungen für eine aus der Motorkühlluft abgeleitete Luftzufuhr vorgeschlagen, jedoch sind diese Lösungen nicht zufriedenstellend, da durch die Kühlluftableitung gleichzeitig die zur Verfügung stehende Kühlluftmenge für auf den Antrieb aufgesetzte Instrumente, Werkzeuge oder Handstücke reduziert wird und dort wiederum zu einer unerwünscht hohen Erwärmung führt. Um dies innerhalb notwendiger Grenzen zu halten, sind daher entsprechend ausreichende und aufwändige Dimensionierungen bei Antrieb und Kühlluftmenge und/oder Kühlluftführung vorzunehmen, welche einer Reduzierung der Antriebsleistung des Motors und der Außenmaße der Vorrichtung entgegen stehen.

Weiter nachteilig ist bei der bekannten Verwendung einer Glühlampe für die genannten Anwendungen, dass die dünne Wendel des Glühfadens oder deren Enden aufgrund von beispielsweise Erschütterungen leicht brechen können und dadurch sowohl eine nur kurze Einsatzzeit möglich als auch eine Austauschbarkeit der Glühlampe erforderlich sind.

Aus der Druckschrift DE 10 2004 061 551 A1 ist eine zum technologischen Hintergrund der Erfindung gehörende zentrale Aushärtungsvorrichtung mit einer Wärmesenke zum Abführen von Wärme bekannt. Diese zentrale Aushärtungsvorrichtung enthält ein längliches Stabgehäuse mit einem nahen und einem fernen Ende, eine an dem fernen Ende angeordnete Lichtquelle, elektronische Scheibkreise, die zumindest teilweise innerhalb des Stabgehäuses zwischen dem nahen Ende und dem fernen Ende angeordnet sind und eine Wärmesenke. Die Lichtquelle kann eine oder mehrere LED's umfassen.

Aus der Druckschrift DE 698 16 716 T2 ist ein zahnärztliches Handstück mit einem Hauptteil bekannt, das einen Turbinenkopf, eine Kupplung und eine Lichtquelle zur Beleuchtung der Behandlungsstelle im Mund des Patienten enthält, die sich dadurch auszeichnen, dass die Lichtquelle eine in dem Turbinenkopf angeordnete Halblageeinrichtung ist. Beide Lösungen sind recht kompliziert, so dass sie im bestimmungsgemäßen Einsatz auch recht störanfällig sind.

Aus der Druckschrift DE 10 2004 022 095 A1 ist eine medizinische Bestrahlungsvorrichtung bekannt. Diese medizinische Bestrahlungsvorrichtung ist versehen mit einem Hauptkörper, einem Leuchtkörper aus einem Lichtemmissionselement, das in einem Lichtauslass des Hauptkörpers vorhanden ist, einem ringförmigen Reflexionselement mit einer ringförmigen Reflexionsfläche am Umfang des Leuchtkörpers, die das Licht von diesem nach vorne reflektiert und einem Linsenelement, das so vorhanden ist, dass es eine vordere Öffnung des Reflexionselements abdeckt, wobei es das direkte Licht vom Leuchtkörper sowie das vom Reflexionselement reflektierte Licht bricht und durchlässt. Bei dieser Vorrichtung wird das gesamte aus dem Linsenelement austretende Licht so immitiert, dass es in ein spezifisches Bestrahlungsgebiet gelenkt wird. Der konstruktive Aufbau dieser bekannten Bestrahlungsvorrichtung ist äußerst kompliziert und daher sehr aufwändig.

Im Übrigen weist eine Glühlampe, insbesondere eine Halogen-Glühlampe, unter anderem bedingt durch auftretende, hohe Einschaltströme, in dieser Bauform und bei der gewünschten Lichtleistung generell eine niedrige Lebensdauer im Bereich von lediglich etwa 40 bis 60 Stunden auf, woraus austauschbedingt hohe Betriebskosten und/oder bereits bei der Herstellung ein hoher baulicher Aufwand durch Verwendung von beispielsweise Vorschaltgeräten resultieren.

Der Erfindung liegt daher als eine Aufgabe zugrunde, eine Lichtabstrahleinrichtung und eine Antriebsvorrichtung mit einer solchen Lichtabstrahleinrichtung für medizinische und/oder dentalmedizinische Instrumente, Werkzeuge und Handstücke zu schaffen, welche auf konstruktiv einfache Art und Weise eine geringe Temperaturentwicklung an Gehäuseoberflächen in einem Bedien- und/oder Gehäusegriffbereich für einen Benutzer zeigt.

Diese Aufgabe wird erfindungsgemäß gelöst durch eine Lichtabstrahleinrichtung nach Patentanspruch 1 und durch eine Antriebsvorrichtung nach Patentanspruch 12.

Zur Überwindung der vorbeschriebenen Nachteile bekannter Anordnungen wird somit erfindungsgemäß eine Lichtabstrahleinrichtung für einen Antrieb medizinischer Instrumente und/oder Handstücke, gekennzeichnet durch eine aus zumindest einer ersten Schicht und zumindest einer zweiten Schicht bestehende Trägereinrichtung; und eine an einer in eine Lichtabstrahlrichtung weisenden Oberfläche der Trägereinrichtung angeordnete Leuchtdiode; wobei die zumindest eine erste Schicht der Trägereinrichtung eine Leiterschicht zur Zufuhr von Energie zu der Leuchtdiode beinhaltet; und die zumindest eine zweite Schicht der Trägereinrichtung eine Wärmeableitschicht zur Ableitung von Abstrahlungswärme der Leuchtdiode beinhaltet.

Bevorzugt ist hierbei die Leuchtdiode eine Hochstrom-Leuchtdiode bzw. Power-LED, die gesockelt und austauschbar oder fest verbaut vorgesehen ist und vorteilhaft Licht mit gutem Wirkungsgrad und geringer Wärmeentwicklung erzeugt. Auch überzeugt der Einsatz einer Leuchtdiode in Bezug auf Langfristigkeit und der daraus resultierenden Verfügbarkeit des (dental-) medizinischen Instrumentes.

Zur Verbesserung des Wärmetransports in der Leiterschicht ist es vorteilhaft, wenn die Leiterschicht der Trägereinrichtung aus Kupfer oder Dickkupfer besteht. Weiter vorteilhaft ist es hierzu, wenn die Leiterschicht eine maximale Fläche der Trägereinrichtung einnimmt.

Bevorzugt ist zudem die zumindest eine zweite Schicht der Trägereinrichtung eine aus einer Wärmeleitpaste und/oder einem Wärmepastendruck und/oder einer Wärmeleitfolie bestehende Schicht, und ist ferner bevorzugt auf der Wärmeableitschicht zumindest ein Abdeckelement aus einem Material mit hoher Wärmeleitfähigkeit angeordnet.

Der Wärmetransport wird insbesondere unterstützt, wenn die zumindest eine zweite Schicht der Trägereinrichtung eine metallische Trägerschicht aus beispielsweise Aluminium, Kupfer, Stahl oder einer metallischen Legierung ist, welche zur Bereitstellung weiterer Funktionen mit einer Wärme leitenden Isolationsschicht und einem Leiter, beispielsweise Kupfer, kaschiert ist.

Bevorzugt ist die zumindest eine erste Schicht der Trägereinrichtung in Lichtabstrahlrichtung unter der zumindest einen zweiten Schicht der Trägereinrichtung angeordnet. In diesem Fall ist weiter bevorzugt die zumindest eine erste Schicht der Trägereinrichtung eine Flammen hemmende Leiterplatte aus Epoxydharz und Glasfasergewebe, auf die die Leiterschicht zur elektrischen Kontaktierung der Leuchtdiode aufgebracht ist. In diesem Fall ist in einer Ausführungsform die Leiterplatte dicker als die Leiterschicht ausgebildet.

Der Wärmetransport der Lichtabstrahleinrichtung wird auch dadurch verbessert, dass sich die Leiterschicht mit Ausnahme von Unterbrechungen zur elektrischen Kontaktierung der Leuchtdiode über im Wesentlichen die gesamte Oberfläche der Trägereinrichtung erstreckt, und nochmals dadurch verbessert, dass die Wärmeableitschicht auf Abschnitten der Leiterschicht angeordnet ist, die nicht von der Leuchtdiode und deren elektrischer Kontaktierung belegt sind.

Auch bevorzugt ist die Trägereinrichtung in Form einer flachen, ringförmigen Scheibenanordnung ausgebildet und decken die Wärmeableitschicht und das zumindest eine Abdeckelement die Oberfläche der scheibenringförmigen Trägereinrichtung derart ab, dass eine Ausnehmung ausgebildet wird, in welcher die Leuchtdiode und deren elektrischer Kontaktierung angeordnet sind.

In einer vorteilhaften Ausführungsform ist die zumindest eine zweite Schicht der Trägereinrichtung in Lichtabstrahlrichtung über der zumindest einen ersten Schicht der Trägereinrichtung angeordnet.

Alternativ hierzu ist es aber ebenso möglich, dass die zumindest eine zweite Schicht der Trägereinrichtung in Lichtabstrahlrichtung unter der zumindest einen ersten Schicht der Trägereinrichtung angeordnet ist und sich über die gesamte Fläche der zumindest einen ersten Schicht erstreckt.

Bevorzugt ist die zumindest eine erste Schicht der Trägereinrichtung eine Flammen hemmende Leiterplatte aus Epoxydharz und Glasfasergewebe, auf die die elektrische Kontaktierung der Leuchtdiode aufgebracht ist.

Somit beinhaltet in einer bevorzugten Ausführungsform die Lichtabstrahleinrichtung in Lichtabstrahlrichtung gesehen: die Leiterplatte aus Epoxydharz und Glasfasergewebe; die auf der Leiterplatte angeordnete Leiterschicht; die auf der Leiterschicht angeordnete Leuchtdiode; die in der Leiterschicht ausgeformte, zumindest eine Kontaktierung aus einem leitenden Material zur Energieversorgung der Leuchtdiode; die auf der Leiterschicht abschnittsweise angeordnete Wärmeableitschicht; und das auf der Wärmeableitschicht aufliegende zumindest eine Abdeckelement.

In einer alternativen bevorzugten Ausführungsform nach der Erfindung beinhaltet die Lichtabstrahleinrichtung in Lichtabstrahlrichtung gesehen: die metallische Trägerschicht; die auf die metallische Trägerschicht kaschierte Isolationsschicht; den auf die metallische Trägerschicht kaschierten Leiter; die auf dem Leiter angeordnete und in dem Leiter kontaktierte Leuchtdiode; die auf der Isolationsschicht abschnittsweise angeordnete Wärmeableitschicht; und das auf der Wärmeableitschicht aufliegende zumindest eine Abdeckelement.

Und in einer weiteren alternativ bevorzugten, erfindungsgemäßen Ausführungsform beinhaltet die Lichtabstrahleinrichtung in Lichtabstrahlrichtung gesehen: die Wärmeableitschicht; die auf der Wärmeableitschicht angeordnete metallische Trägerschicht; die auf die metallische Trägerschicht kaschierte Isolationsschicht; den auf die metallische Trägerschicht kaschierten Leiter; die auf dem Leiter angeordnete und in dem Leiter kontaktierte Leuchtdiode; und das auf dem Leiter aufliegende zumindest eine Abdeckelement.

Bei der letztgenannten Ausführungsformen ist es natürlich grundsätzlich möglich, dass auch zwischen dem Leiter und dem auf dem Leiter aufliegenden, zumindest einen Abdeckelement ebenfalls eine Wärmeableitschicht vorgesehen ist.

Wie bereits erwähnt wurde, wird die Aufgabe auch gelöst durch eine Antriebsvorrichtung zum Antrieb medizinischer Instrumente und/oder Handstücke, gekennzeichnet durch ein Gehäuse mit einem ersten Abschnitt eines ersten Volumens zur Aufnahme eines Antriebsmotors und einem zweiten Abschnitt eines zweiten Volumens zur Ankopplung eines durch den Antriebsmotor angetriebenen Instruments und/oder Handstücks; und eine Trägereinrichtung mit einer darauf angeordneten Leuchtdiode zur Abstrahlung von Licht in Richtung auf einen Bereich in der Umgebung des Instruments oder Handstücks, wobei die Trägereinrichtung eine gute Wärmeankopplung zu dem Gehäuse und/oder Abschnitten desselben zur guten Ableitung von durch die Leuchtdiode erzeugter Wärme bereitstellt.

Bei einer solchen Antriebsvorrichtung ist bevorzugt die Trägereinrichtung in Form einer ringförmigen Scheibe oder eines Segments derselben ausgebildet, deren bzw. dessen die Leuchtdiode tragende Fläche sich im Wesentlichen rechtwinklig zur Längserstreckung der Rotationsachse des Antriebsmotors erstreckt.

Naturgemäß kann bei einer solchen Antriebsvorrichtung das erste Volumen größer sein als das zweite Volumen, oder kann das erste Volumen kleiner sein als das zweite Volumen.

Hervorragende Wärmeeigenschaften werden bei einer solchen Antriebsvorrichtung durch die Verwendung einer Lichtabstrahleinrichtung wie vorstehend kurz beschrieben erzielt.

Dies wird vorteilhaft weiter unterstützt, wenn zur Kühlung der aufgrund der Wärmeleistung der Leuchtdiode erzeugten Wärmeabstrahlung an der Trägereinrichtung eine maximale Segmentfläche mit einer Wärmekontaktfläche an einer ersten Seite unter Verwendung eines Wärmeableitmaterials und/oder an einer zweiten Seite ein Wärmeableitmaterial auf einem isolierten Metallsubstrat vorgesehen sind.

Verstärkt wird diese vorteilhafte Wirkung dadurch, dass zur Kühlung ein guter Wärmeübergang zu dem Gehäuse oder den Teilen desselben mittels einer Einrichtung zur Erzeugung einer Federvorspannung und/oder einem Elastomerelement hergestellt wird.

Eine vorteilhafte Weiterbildung sieht vor, dass die Einrichtung zur Erzeugung einer Federvorspannung beziehungsweise das Elastomerelement federnde Eigenschaften aufweist und vorzugsweise aus einem insbesondere sterilisierbaren Silikon gebildet ist, wobei gleichzeitig beziehungsweise zusätzlich eine Abdichtung gegenüber Anbauteilen, wie zum Beispiel der Antriebsvorrichtung im Instrument beziehungsweise Handstück oder dessen Fuss-, Mittel- oder Kopfstück bildet. Durch die plastischen Eigenschaften wird der vorher bereits beschriebene positive Effekt bezüglich der Kühlung beziehungsweise des guten Wärmeüberganges zu dem Gehäuse oder zu den Teilen erreicht. Gleichzeitig wird allerdings auf Grund der Ausgestaltung des Elastomerelementes in Form von sterilisierbarem Silikon eine Abdichtung erreicht, so dass zusätzliche Abdichtungsmassnahmen entfallen können.

Vorteilhafterweise ist dabei an dem Elastomerelement wenigstens ein Medienrohr mit gegebenenfalls innenliegenden Medienleitungen angeordnet oder dort anschliessbar. Dabei wird im Falle des Anschlusses des Medienrohres an wenigstens einem Medienanschluss davon ausgegangen, dass der Medienanschluss so viele Verbindungsstücke aufweist, wie notwendig sind, um die innenliegenden Medienleitungen miteinander zu verbinden. Vorteilhafterweise befindet sich dann auf der dem Medienrohr abgewandten Seite ein weiterer Medienanschluss, um die Medien entsprechend weiterzuführen.

Die Erfindung schlägt des Weiteren vor, dass an dem Elastomerelement auch wenigstens eine Flüssigkeitzufuhr anschliessbar beziehungsweise vorgesehen ist, die wenigstens eine Rücksaugstopvorrichtung zumindest auf der der Flüssigkeitszufuhr zugewandten Seite aufweist. Selbstverständlich ist es nach der Erfindung auch vorgesehen, dass die Flüssigkeitszufuhr mit entsprechenden Verbindungen beziehungsweise Kopplungen an dem Elastomerelement befestigt ist.

Aufgrund der vorstehend beschriebenen Maßnahmen wird neben einer verbesserten Benutzbarkeit einer Antriebsvorrichtung für medizinische und/oder dentalmedizinische Instrumente, Werkzeuge und Handstücke weiter überraschend auch bei hoher Licht- und Abstrahlungsleistung einer darin verbauten Lichtquelle eine verlängerte Einsatzzeit und Lebensdauer der Lichtquelle bereitgestellt.

Des weiteren wird die erfindungsgemäße Aufgabe auch gelöst durch ein medizinisches oder zahnmedizinisches Instrument beziehungsweise Handstück, welches eine Trägereinrichtung mit einer darauf angeordneten Leuchtdiode zur Abstrahlung von Licht in Richtung auf einen Bereich in der Umgebung des Instrumentes oder Handstückes aufweist, wobei die Trägereinrichtung eine gute Wärmeankopplung zu dem Instrumenten- beziehungsweise Handstückgehäuse und/oder Abschnitten desselben zur guten Ableitung von durch die Leuchtdiode erzeugter Wärme bereitstellt.

Das erfindungsgemäße Konzept erlaubt es, eine Trägereinrichtung an verschiedenen Stellen einzusetzen. Die Anordnung der Trägereinrichtung, welche die Leuchtdiode trägt, ist sowohl auf der Antriebsvorrichtung einerseits, andererseits aber auch auf der auf eine Antriebsvorrichtung austauschbar aufzusetzenden medizinischen oder zahnmedizinischen Instrumente beziehungsweise Handstücke möglich. Da die Wärmeentwicklung der erfindungsgemäßen Anordnung der Lichtabstrahleinrichtung durch Einsatz der Leuchtdiode sehr viel geringer ist und gleichzeitig der flächige Aufbau der Lichtabstrahleinrichtung mit Hilfe der vorgeschlagenen Trägereinrichtung thermisch sehr viel besser an die jeweiligen Gehäuse gekoppelt ist, können diese wärmeentwickelnden, energieverbrauchenden Elemente in dem Bereich positioniert werden, wo das Licht tatsächlich benötigt wird. Dabei ist zu beachten, daß der vordere Kopfbereich des Instrumentes beziehungsweise Handstückes in den Mundraum eingeführt wird und daher hier erst recht keine übermäßige Wärmeentwicklung gewünscht ist, um den Patienten nicht entsprechend zu verletzen. Das erfindungsgemäße Konzept erlaubt aber eine Anordnung gerade in diesem vorderen Bereich, da eine übermäßige Wärmeentwicklung eben nicht mehr stattfindet. Der Einsatz von entsprechenden Lichtleitelementen oder -systemen (Lichtleitfasern usw.) wird reduziert, gegebenenfalls sogar komplett obsolet, wenn die lichtemmittierende Leuchtdiode zum Beispiel im vorderen Bereich, zum Beispiel am Bearbeitungswerkzeug, im Kopfbereich des Instrumentes oder Handstückes angeordnet ist.

In diesem Zusammenhang ist zu erwähnen, daß üblicherweise entsprechende Lichtleitelemente (Lichtleitfasern usw.) im Handstück beziehungsweise Instrument angeordnet sind, deren Einkopplungspunkt im Fußbereich des Instrumentes so positioniert ist, daß die an der Antriebsvorrichtung vorgesehene Leuchtdiode zumindest einen Teil, wenn nicht sogar den überwiegenden Teil seines emmittierten Lichtes in das Lichtleitsystem einspeist.

Die Trägereinrichtung, die im Bereich des medizinischen oder zahnmedizinischen Instrumentes beziehungsweise Handstückes angeordnet ist, besitzt bevorzugt die Form einer ringförmigen Scheibe oder eines Segmentes, wobei die Leuchtdiode vorzugsweise in Richtung der Längserstreckung des Instrumenten- beziehungsweise Handstückgehäuses, insbesondere in Richtung des Kopfbereiches des Instrumentes beziehungsweise Handstückes Licht abstrahlt, woraus sich bevorzugt ergibt, daß die die Leuchtdiode tragenden Fläche sich im wesentlichen rechtwinklig zur Längserstreckung des Instrumenten- beziehungsweise Handstückgehäuses erstreckt.

Die Erfindung umfaßt dabei sowohl Lösungen, bei welchen sowohl die eingangs beschriebene Lichtabstrahleinrichtung an dem erfindungsgemäß vorgeschlagenen Instrument beziehungsweise Handstück eingesetzt wird, aber auch eine hierzu alternative, wie oben beschriebene, Ausgestaltung an der Antriebsvorrichtung aufweist. Durch eine gute Wärmeankopplung der Trägereinrichtung an das jeweilige Volumen wird die Wärme effektiv abgeleitet und verteilt, wodurch die gesamte Verlustleistung auf niedrigem Temperaturniveau an die Umgebung abgegeben.

Daher ergibt es sich, daß die vorgenannten Merkmale, die im Zusammenhang mit der Antriebsvorrichtung und der Trägereinrichtung diskutiert worden sind, in gleicher Weise, um Wiederholungen zu vermeiden, auch bei dem zur Erfindung gehörenden Instrument beziehungsweise Handstück anwendbar sind.

In einer bevorzugten Variante der Erfindung ist dabei vorgesehen, daß die Trägereinrichtung an dem Instrument beziehungsweise Handstück in dessen Fuß-, Mittel- oder Kopfbereich angeordnet ist. Natürlich ist eine entsprechende Kombination möglich, das heißt, daß ein Instrument beziehungsweise Handstück oder auch andere Vorrichtung eine Mehrzahl von Trägereinrichtungen, jeweils mit einer Leuchtdiode ausgestattet, aufweist und so eine komplexere, aber auch komfortablere Beleuchtung möglich ist. An den jeweiligen Stellen ist dann gegebenenfalls auch ein weiteres Lichtleitsystem vorsehbar.

Zur Versorgung der Leuchtdiode mit Energie, bevorzugt Strom, ist im Fußbereich des Instrumentes beziehungsweise Handstückes mindestens eine, üblicherweise zwei oder mehrere Energieleitungskontakte vorgesehen. Dabei ist zu beachten, daß bei einem bestimmungsgemäßen Gebrauch der Instrumente der Benutzer immer eine Mehrzahl von Instrumenten oder Handstücken auswechselbar auf einer gemeinsamen Antriebsvorrichtung einsetzt und im Kupplungsbereich dieser Antriebsvorrichtung dann entsprechende, hiermit kommunizierende Energieleitungskontakte vorgesehen sind. An der Leuchtdiode vorgesehene Leitungen enden an den Energieleitungskontakten im Fußbereich und leiten dann die Energie von der Antriebsvorrichtung zur Leuchtdiode, wenn dieses Instrument oder Handstück mit einem entsprechenden Handstückträger oder Antriebsvorrichtung verbunden ist.

Die Erfindung wird nachfolgend anhand von Ausführungsbeispielen unter Bezugnahme auf die Zeichnung näher beschrieben. Es zeigen:
- Fig. 1: eine vereinfachte, perspektivische Darstellung einer bekannten Antriebsvorrichtung für medizinische und/oder dentalmedizinische Instrumente, Werkzeuge oder Handstücke nach dem Stand der Technik (St. d. T.);
- Fig. 2: eine vereinfachte, perspektivische Darstellung einer Antriebsvorrichtung für medizinische und/ oder dentalmedizinische Instrumente, Werkzeuge oder Handstücke nach einem Ausführungsbeispiel der Erfindung;
- Fig. 3: eine stark vereinfachte, perspektivische Darstellung einer Lichtabstrahleinrichtung mit einem Leuchtmittel und einem Träger nach einem Ausführungsbeispiel der Erfindung; und
- Fig. 4a bis 4c: vereinfachte Seitenansichten von Ausführungsbeispielen des Aufbaus der Lichtabstrahlanordnung nach Fig. 3.
- Fig. 5, Fig. 6: jeweils in einer perspektivischen Darstellung die erfindungsgemäße Antriebsvorrichtung in Verbindung mit einem Instrument oder Handstück;
- Fig. 7a, Fig. 7b: jeweils in einer perspektivischen Ansicht eine weitere Variante unter Verwendung des erfindungsgemäßen Handstückes beziehungsweise Instrumentes,
- Fig. 8a - c: weitere Ausführungsform einer Kupplungseinrichtung mit Lichtstrahleinrichtung nach der Erfindung.

In den Figuren sind gleiche oder einander entsprechende Elemente jeweils mit den gleichen Bezugszeichen bezeichnet und werden daher, sofern nicht zweckmäßig, nicht erneut beschrieben.

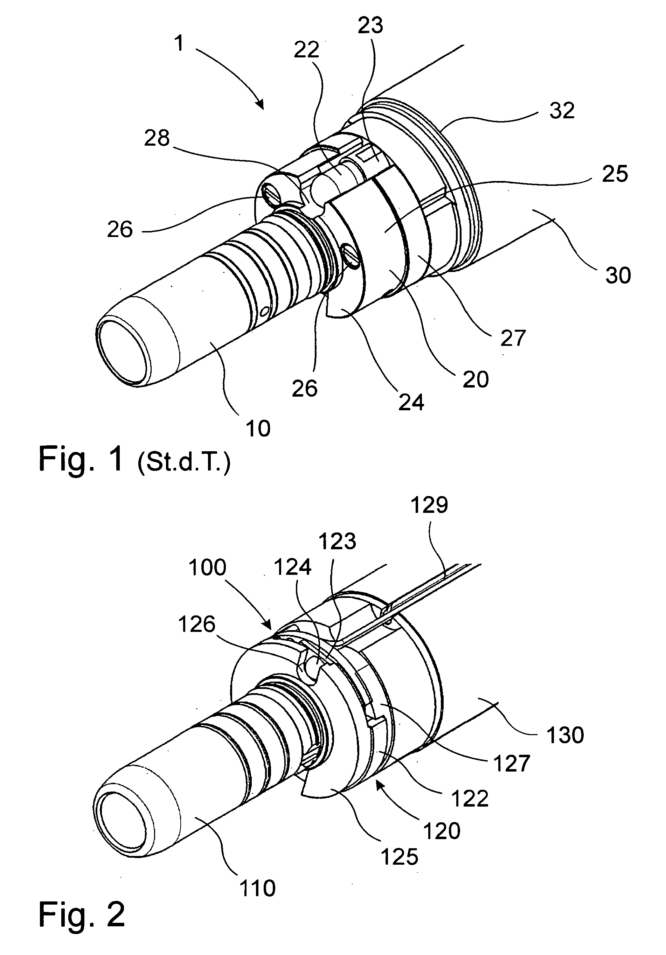

Die Fig. 1 zeigt eine vereinfachte, perspektivische Darstellung einer Außenansicht einer bekannten Antriebsvorrichtung 1 für medizinische und/oder dentalmedizinische Instrumente, Werkzeuge oder Handstücke. Die Antriebsvorrichtung 1, welche als Ganzes von einem nicht näher bezeichneten, gegebenenfalls mehrteiligen Gehäuse umgeben ist, ist im Wesentlichen in drei funktionale Abschnitte unterteilt.

Ein erster funktionaler Abschnitt der Antriebsvorrichtung 1 ist eine Kupplungseinrichtung 10 zur steckbaren und/oder rastenden, kraftschlüssigen Ankopplung eines anzutreibenden medizinischen oder dentalmedizinischen Instruments, Werkzeugs oder Handstücks (nicht gezeigt), deren Anordnungen an sich bekannt sind und daher nicht näher beschrieben werden.

Ein zweiter funktionaler Abschnitt der Antriebsvorrichtung 1 wird durch eine Lichtabstrahlanordnung 20 gebildet, in welchem eine Glühlampe oder Hochdrucklampe 22, vorwiegend eine Halogen-Glühlampe, in einer in dem Gehäuse montierten Fassung 23 in gehäuseseitige Kontaktanschlüsse steckbar gesockelt ist.

Ein dritter funktionaler Abschnitt der Antriebsvorrichtung 1 besteht schließlich aus einem Antriebsabschnitt 30, in welchem gehäuseinnenseitig ein medizinischer oder dentalmedizinischer Antrieb oder Motor (nicht gezeigt) angeordnet ist, welcher kraftschlüssig mit der Kupplungseinrichtung 10 verbunden ist und das anzutreibende medizinische oder dentalmedizinische Instrument, Werkzeug oder Handstück in eine vorbestimmte Bewegung versetzt. Der Antrieb oder Motor als solcher ist an sich bekannt und wird daher nicht näher beschrieben.

Wie der Fig. 1 entnehmbar ist, ist die Lichtabstrahlanordnung 20 zwischen der Kupplungseinrichtung 10 und dem Antriebsabschnitt 30 angeordnet und weist eine zu der Kupplungseinrichtung 10 hin gerichtete Stirnfläche 24 eines Körpers 25 aus beispielsweise Metall auf. Der Körper 25 ist mittels Verschraubungen 26 direkt an einer Sockelträgerplatte 27 oder durch diese hindurch an dem Antriebsabschnitt 30 befestigt und umschließt, zur Umfangsseite des bei der gezeigten Anordnung rundförmigen Gehäuses hin offen, eng die sich in einer Aussparung 28 des Körpers 25 befindende Glühlampe 22. Der Körper 25 als solcher ist massiv mit gehäuseabhängig größtmöglichem Volumen ausgebildet, um zum Einen die Wärmeentwicklung der Glühlampe 22 aufnehmen und ableiten sowie zum Anderen Raum für eine gegebenenfalls notwendige Kühlmittelzufuhr bieten zu können. Die Abstrahlrichtung der Glühlampe 22 ist aus der Stirnfläche 24 heraus in Richtung eines arbeitsbereichseitigen Endes der Kupplungseinrichtung 10 orientiert, so dass von der Glühlampe 22 abgestrahltes Licht einen vor dem angekoppelten Instrument, Werkzeug oder Handstück liegenden Arbeitsbereich eines Benutzers beleuchtet.

Ist bei der bekannten Antriebsvorrichtung das Instrument, Werkzeug oder Handstück betriebsbereit auf die Kupplungseinrichtung 10 aufgesteckt, liegt ein antriebsabschnittseitiges Ende eines (nicht gezeigten) Gehäuses des Instruments, Werkzeugs oder Handstücks beispielsweise an einer Abstufung 32 des Gehäuses des Antriebsabschnitts 30 an und umschließt dabei auch die Lichtabstrahlanordnung 20 derart, dass der Umfang des Körpers 25, der Umfang der Sockelträgerplatte 27 und die Glühlampe 22 dicht unter dem Gehäuse des Instruments, Werkzeugs oder Handstücks zu liegen kommen. Dadurch entstehen, da dieses Gehäuse außenseitig gleichzeitig die Bedien- oder Griffoberfläche des Instruments, Werkzeugs oder Handstücks für einen Benutzer bildet, durch die physikalisch bedingte hohe Abstrahlungsleistung der Glühlampe 22 und den Wärmetransport der entstehenden Wärme an das Gehäuse an unmittelbar benachbarten Gehäuseabschnitten sehr hohe Temperaturen, so genannte Hot-Spots als lokal sehr heiße Stellen, welche auch bei vorhandener Kühlung dieser Gehäuseabschnitte auf zulässige Temperaturen für den das Gehäuse haltenden Benutzer unangenehm sind und die Anwendungsdauer bzw. die Haltedauer des Instruments, Werkzeugs oder Handstücks beschränken.

Die Fig. 2 zeigt eine vereinfachte, perspektivische Darstellung einer Antriebsvorrichtung 100 für medizinische und/oder dentalmedizinische Instrumente, Werkzeuge oder Handstücke gemäß einem Ausführungsbeispiel nach der Erfindung.

Der grundlegende Aufbau der Antriebsvorrichtung 100 gemäß dem Ausführungsbeispiel entspricht dem der bekannten Antriebsvorrichtung 1, das heißt, auch die Antriebsvorrichtung 100 weist als ersten funktionalen Abschnitt eine Kupplungseinrichtung 110, als zweiten funktionalen Abschnitt eine Lichtabstrahleinrichtung 120 und als dritten funktionalen Abschnitt einen Antriebsabschnitt 130 auf.

Während die Kupplungseinrichtung 110 und der Antriebsabschnitt 130 bereits aus Kompatibilitätsgründen denjenigen der bekannten Antriebsvorrichtung 1 entsprechen können und, an sich bekannt, nicht näher beschrieben werden, und die Lichtabstrahleinrichtung 120 wie die bekannte Lichtabstrahlanordnung 20 zwischen der Kupplungseinrichtung 110 und dem Antriebsabschnitt 130 mit gleicher Lichtabstrahlrichtung angeordnet ist, unterscheidet sich jedoch der Aufbau der Lichtabstrahleinrichtung 120 der Antriebsvorrichtung 100 grundlegend von der Lichtabstrahlanordnung 20 der Antriebsvorrichtung 1. Dies wird nachstehend anhand der Fig. 2 näher beschrieben.

Wie der Fig. 2 entnehmbar ist, besteht die Lichtabstrahleinrichtung 120 vereinfacht aus einem Träger 122, auf welchem eine auf einem Zwischenträger 123 montierte Leuchtdiode 124 fest angeordnet ist.

Die Leuchtdiode 124 ist zur Erzielung einer medizinisch/dentalmedizinisch guten Lichtleistung bevorzugt eine Hochstrom-LED bzw. Power-LED, welche aufgrund einer größeren Chipfläche mit hohen Strömen betrieben werden kann. Aufgrund der dadurch entwickelten hohen Leistung der Hochstrom-Leuchtdiode ist für deren optimale physikalischen Eigenschaften und Lebensdauer eine gute Entwärmung der Diode einer der Entwurfs- und Auslegungsfaktoren einer Anwendung.

Ein Abdeckelement 125 mit einer Ausnehmung 126, welche die Leuchtdiode 124 zur Umfangsrichtung hin offen umschließt, ist in der Lichtabstrahlrichtung über dem Träger 122 auf diesem aufliegend angeordnet. Alternativ kann das Abdeckelement 125 auch fest verbunden mit dem Träger 122 ausgeformt sein, wobei in diesem Fall die Ausnehmung 126 einen Öffnungsbereich besitzt, welcher genügend Raum zur Montage und Kontaktierung der Leuchtdiode 124 auf dem Träger 122 bietet. Die Kontaktierung der Leuchtdiode 124, in Fig. 2 nicht dargestellt, erfolgt bevorzugt auf der lichtabstrahlseitigen Fläche des Trägers 122, während die Energiezufuhr zu der Leuchtdiode 124 von der (der lichtabstrahlseitigen Fläche des Trägers 122 abgewandten) Rückseite des Trägers 122 über in Fig. 2 angedeutete, in dem Antriebsabschnitt 30 in beispielsweise einer Nut oder hierfür vorgesehenen Ausnehmungen desselben verlaufend herangeführte Leiterverbindungen 129 erfolgt. Es wird angemerkt, dass die Kontaktierung der Leuchtdiode 124 auf beliebige Weise nach Art einer Hindurch-, Entlang- oder Vorbeiführung von Leiterverbindungen von der Rückseite (der Seite des Antriebsabschnitts 130) des Trägers 122 zu dessen Vorderseite (der Lichtabstrahlseite der Lichtabstrahleinrichtung 120) ausgeführt sein kann.

Der Träger 122 der Lichtabstrahleinrichtung 120 kann insbesondere als scheibenförmige Trägerplatte oder in Form eines Segments einer solchen Trägerplatte oder dergleichen mit einer Leuchtdioden-Anordnungsfläche im Wesentlichen rechtwinklig zur Längserstreckung des Motors bzw. dessen Rotationsachse ausgeführt sein und einen Aufbau derart aufweisen, dass er für das von der auf ihm angebrachten Leuchtdiode 124 mit gutem Wirkungsgrad und daher geringer Wärmeentwicklung erzeugte Licht eine sehr gute Wärmeankopplung, beispielsweise zum Antriebsabschnitt 130 hin über eine zwischen liegende Elastomerplatte oder -scheibe 127, zu angrenzenden und/oder übrigen Gehäuseteilen bereitstellt.

Hierdurch kann die durch die Leuchtdiode 124 erzeugte Wärme auch ohne aufwändige aktive und/oder voluminöse Kühlmaßnahmen rasch und gut abgeleitet werden, ohne dass an der Bedien- oder Griffoberfläche für den Bediener unzulässig oder unangenehm hohe Temperaturen auftreten. Als zusätzliche Wirkung werden durch eine derartige Ausgestaltung des Trägers 122 mit gleichzeitig erschütterungsfester Montage der Leuchtdiode 124 aufgrund der Erfindung sowohl die Einsatzzeit als auch die Standzeit des Leuchtmittels beträchtlich erhöht und kommt es dadurch nicht zu vorzeitigen Ausfällen desselben, so dass eine gute Wartungsfreiheit bei deutlich geringeren Wartungs- und Tauschteilekosten erzielt wird.

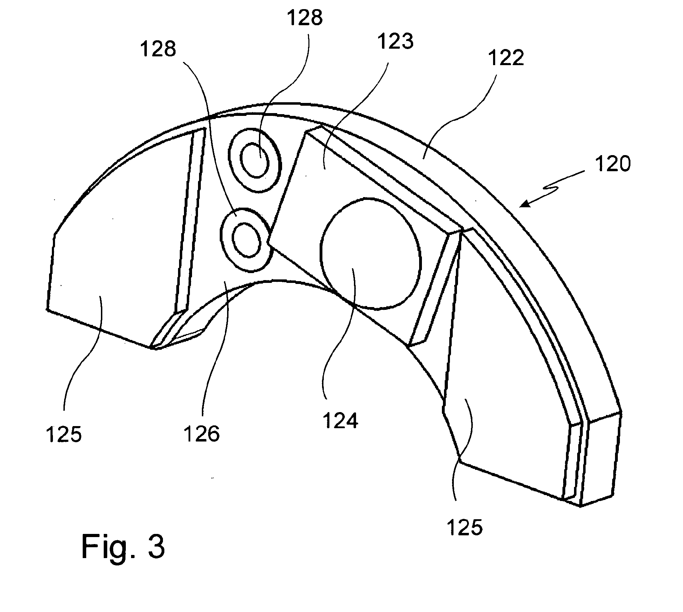

Die Fig. 3 zeigt zur weiteren Erläuterung eine stark vereinfachte, perspektivische Darstellung der Lichtabstrahleinrichtung 120 und ihrer wesentlichen Elemente nach einem Ausführungsbeispiel. Hierbei entspricht die Ausrichtung der in Fig. 3 gezeigten Lichtabstrahleinrichtung 120 in etwa der Einbaulage derselben in Fig. 2, und ist der Träger 122 in einer bevorzugten Ausführungsform als Segment einer ringförmigen Scheibe ausgebildet.

Es wird angemerkt, dass die Lichtabstrahleinrichtung 120 eine derartige ringförmige Scheibe oder mehrere Segmente einer solchen umfassen kann, wobei in dem Fall, in dem nur eine Leuchtdiode 124 auf einem Träger 122 vorgesehen ist, übrige Segmente aus entsprechenden passiven Blindsegmenten aus geeignetem Material bestehen können, welche lediglich zur Erhöhung der Wärmeableitung beitragen. Selbstverständlich kann die Lichtabstrahleinrichtung 120 aber auch mehrere aktive Trägersegmente umfassen, auf welchen jeweils zumindest eine Leuchtdiode 124 angeordnet ist. In diesem Fall kann die Lichtabstrahlmenge der Lichtabstrahlanordnung 120 vorteilhaft erhöht und/oder in vorbestimmte Richtungen gelenkt werden, oder kann dann, wenn eine wahlweise Zu- und Abschaltbarkeit einzelner Leuchtdioden 124 vorgesehen ist, die abgegebene Lichtmenge selektiv erhöht oder verringert werden.

Im Einzelnen sind der Fig. 3 zunächst der Träger 122 selbst und Teile des Abdeckelements 125 entnehmbar. Das Abdeckelement 125 besteht vorteilhaft aus einem Metall, beispielsweise einem geeigneten Stahl mit guter Wärmeleitfähigkeit, um die von der Leuchtdiode 124 während deren Betriebs erzeugte Wärme über ihre Auflageflächen auf dem Träger 122 und das in der ebenfalls erkennbaren, von den Teilen des Abdeckelements 125 umgrenzten Ausnehmung 126 vorhandene Medium, beispielsweise Luft, aufzunehmen und an umgebende Gehäuseteile abzuleiten. Ferner sind nach der Fig. 3 in der Ausnehmung 126 der sich auf dem Träger 122 befindende Zwischenträger 123 und auf diesem wiederum die Leuchtdiode 124 angeordnet, und sind Kontaktierungen 128, welche zur Energiezufuhr zu der Leuchtdiode 124 mit dem Zwischenträger 123 verbunden sind, vorgesehen.

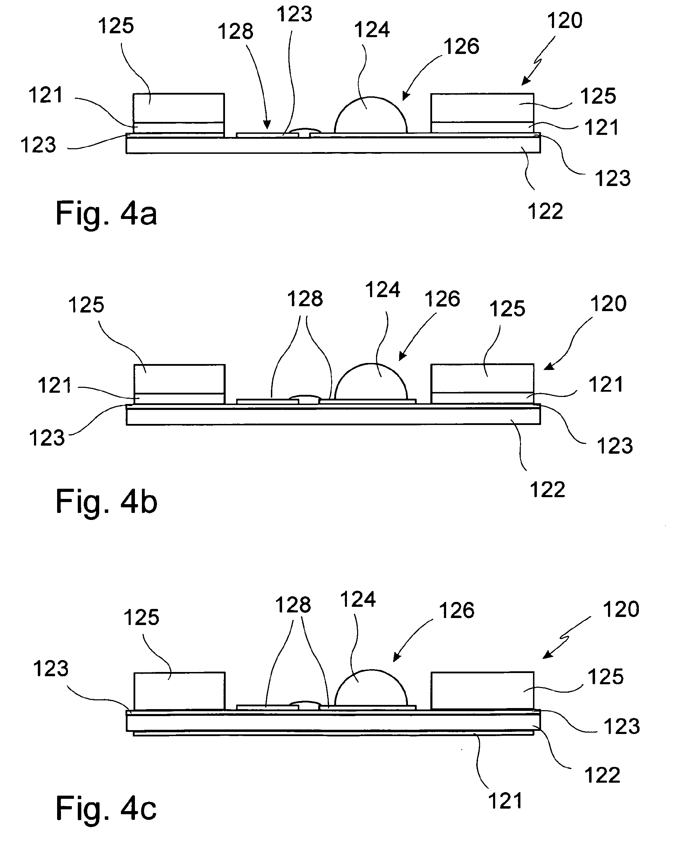

Die in der Fig. 3 stark vereinfacht dargestellte Lichtabstrahleinrichtung 120 ist in bevorzugten Ausführungsformen mehrschichtig aus verschiedenartigen Werkstoffen und und/oder Materialien und/oder Elementen aufgebaut. Die Fig. 4a bis 4c zeigen in vereinfachten Seitenansichten der Lichtabstrahleinrichtung 120 nach Fig. 3 solche Ausführungsformen anhand von Beispielen.

Gemäß Fig. 4a besteht in einer ersten bevorzugten Ausführungsform die Lichtabstrahleinrichtung 120 von unten nach oben gesehen zunächst aus einer Leiterplatte bzw. Leiterkarte oder Platine, welche eine Art Grundplatte der Lichtabstrahleinrichtung 120 in Form des Trägers 122 bildet. Die Leiterplatte ist allgemein eine Trägerplatte aus Flammen hemmendem, isolierendem Material mit fest haftenden, leitenden Verbindungen, und besteht bevorzugt aus einem so genannten FR4-Material, das heißt einem Verbund aus einem Epoxydharz und einem Glasfasergewebe (mit Epoxydharz getränkte Glasfasermatten), ohne jedoch hierauf beschränkt zu sein.

In der Lichtabstrahlrichtung folgend ist auf dem Träger 122 eine Leiterschicht aus beispielsweise Kupfer angeordnet, welche dem vorgenannten Zwischenträger 123 nach Fig. 3 entspricht. In der in Fig. 4a gezeigten Ausführungsform ist die als Zwischenträger 123 ausgebildete Leiterschicht mit Unterbrechungen über den gesamten Träger 122 verlaufend ausgebildet, wobei mittels der Unterbrechungen in dem Zwischenträger 123 als Leiterschicht auch die Kontaktierungen 128 in der Ausnehmung 126 hergestellt sind. In der Ausnehmung 126 ist ferner die Leuchtdiode 124 gezeigt, welche ebenfalls auf dem als Leiterschicht ausgebildeten Zwischenträger 123 auf geeigneter Art und Weise montiert und mit angedeuteten, nicht näher bezeichneten Bond- oder Lötverbindungen über die Kontaktierungen 128 zur Energiezufuhr kontaktiert ist. Die auf dem Zwischenträger 123 ausgebildete Leiterschicht 121 liegt in der Regel auf einem elektrischen Massepotenzial der Gesamtanordnung, so dass nicht erwähnt zu werden braucht, dass die Kontaktierungen 128 gegenüber diesem Massepotenzial geeignet elektrisch isoliert sind.

Es wird angemerkt, dass die Leiterschicht als Zwischenträger 123 gegenüber üblichen Leiterbahnen auf Leiterplatten dick ausgeführt sein kann, beispielsweise als Dickkupfer mit Kupferstärken von mehr als 200 bis 400 µm, um einen deutlich verbesserten lateralen Wärmetransport von der Leuchtdiode 124 weg in Randbereiche der Lichtabstrahleinrichtung 120 zu gewährleisten und höhere Strombelastbarkeiten, wie sie bei Verwendung einer Hochstrom-Leuchtdiode 124 auftreten können, zu erlauben.

Weiter ist in der Lichtabstrahlrichtung auf die Leiterschicht als Zwischenträger 123 ein so genanntes "Thermal Interface Material" (TIM) bzw. Wärmezwischenschichtmaterial 121, beispielsweise eine Wärmeleitpaste, ein Wärmepastendruck oder eine Wärmeleitfolie, aufgebracht.

Die Verwendung einer Wärmeleitfolie kann hierbei einen Vorteil dahingehend bieten, dass ein optimaler thermischer Kontakt zwischen den Montagefläche erzielt wird, eine einfache Verarbeitung der Folie durch Fixieren mittels Kleben möglich ist, und eine unerwünschte Ausgasung oder Austrocknung vermieden wird.

Die Lage dieses Wärmezwischenschichtmaterials 121 an dieser Stelle dient in der gezeigten Ausführungsform dazu, die von der Leuchtdiode 124 erzeugte und über die Leiterschicht als Zwischenträger 123 abgeleitete Wärme nach oben, d. h. in Lichtabstrahlrichtung, weiterzuleiten. Nach unten, d. h. in Richtung des Trägers 122, kann in diesem Fall die Wärmeleitfähigkeit dessen Materials für eine Entwärmung der Leuchtdiode 124 ohne aufwendige und teure Maßnahmen wie beispielsweise zusätzliche thermische Durchkontaktierungen unter Verwendung eines Werkstoffs mit hohem Wärmeleitwert oder Metallkernen nicht ausreichend sein.

Schließlich sind auf dem Wärmezwischenschichtmaterial 121 nach Fig. 4a das Abdeckelement 125 oder, bei einer segmentförmigen Ausführung der Lichtabstrahleinrichtung 120, Abdeckelemente 125 angeordnet, welche bevorzugt aus einem Werkstoff oder Material mit guter Wärmeleitfähigkeit, beispielsweise einer geeigneten Stahlsorte bestehen und eine Wärmeankopplung der Lichtabstrahleinrichtung 120 an das umgebende Gehäuse bereitstellen.

Gemäß Fig. 4b weist die Lichtabstrahleinrichtung 120 im Gegensatz zu der Lichtabstrahleinrichtung 120 nach Fig. 4a den in diesem Fall die unterste Schicht bildende Träger 122 aus einem Material oder Werkstoff mit guter Wärmeleitfähigkeit, beispielsweise einem Metall wie etwa Aluminium, auf. Ein solcher Träger ist beispielsweise ein so genanntes Insulated Metal Substrate (isoliertes Metallsubstrat oder IMS), d. h. ein metallischer Träger für zum Beispiel elektronische Schaltungen, aus etwa Aluminium, Kupfer oder Stahl oder einer geeigneten Legierung und dergleichen, der in der Regel einseitig mit einer dünnen, gut Wärme leitenden Isolationsschicht und Kupfer kaschiert ist.

Auf dem Träger 122 mit guter Wärmeleitfähigkeit ist in Lichtabstrahlrichtung sodann ein gegenüber der Ausführungsform nach Fig. 4a dünnerer Zwischenträger 123 aufgebracht, welcher in diesem Fall aus beispielsweise dem vorgenannten FR4-Material oder einer Kaschierung wie vorstehend erwähnt besteht, und auf welchem die Kontaktierungen 128 in Form von Leiterflächen aus beispielsweise Kupfer zur Energieversorgung der Leuchtdiode 124 aufgebracht sind.

Ferner sind auf dem dünneren Zwischenträger 123 wie bei der Ausführungsform nach Fig. 4a die Ausnehmung 126 umgebend und in Lichtabstrahlrichtung aufeinander folgend zunächst die Wärmezwischenschicht 121 und das Abdeckelement bzw. Abdeckelemente 125 angeordnet.

Die in Fig. 4b gezeigte Ausführungsform der Lichtabstrahleinrichtung 120 bietet gegenüber der Ausführungsform nach Fig. 4a einen nochmals verbesserten Wärmetransport in das umgebende Gehäuse, da die von der Leuchtdiode 124 erzeugte Wärme über die dünnere Zwischenschicht 123 zum Einen über den Träger 122 nach unten, d. h. zur Seite des Antriebsabschnitts 30, und zum Anderen über die Wärmezwischenschicht 121 und das Abdeckelement 125 auch beidseitig lateral nach oben, d. h. in Lichtabstrahlrichtung, an das umgebende Gehäuse abgeführt wird.

Die geringere Wärmeleitfähigkeit der Zwischenschicht 123 wirkt hierbei aufgrund der dünnen Dicke dieser Schicht nicht nachteilig beschränkend und kann mittels einer geeigneten Auslegung und Führung der Kontaktierungen 128 optimiert werden. Im Übrigen stellt diese Ausführungsform eine kostengünstige Realisierung auch dadurch dar, dass die Leiterschicht auf der dünneren Zwischenschicht 123 nur für die Kontaktierungen 128 und nicht großflächig ausgeführt zu werden braucht und somit Einsparungen des Leitermaterials erlaubt.

Bei der weiteren bevorzugten Ausführungsform nach Fig. 4c, welche grundlegend ähnlich aufgebaut ist wie die Ausführungsform nach Fig. 4b, so dass entsprechende und gleich wirkende Elemente nicht erneut beschrieben werden, ist die Wärmezwischenschicht 121 nicht zwischen der Zwischenschicht 123 und des Abdeckelements 125, sondern an der Unterseite des Trägers 122 zum Antriebsabschnitt 30 hin angeordnet.

Mit dieser Ausführungsform wird dadurch aufgrund der verbesserten Wärmeankopplung der Lichtabstrahleinrichtung 120 an den Antriebsabschnitt 30 vorteilhaft ein nochmals verbesserter Wärmetransport in Bereiche der medizinischen/dentalmedizinischen Antriebsvorrichtung erzielt, die weiter entfernt von den Bedien- und Griffoberflächen für den Benutzer liegen, während ein geringerer Wärmetransport in das Abdeckelement 125 erfolgt, so dass insgesamt die Verteilung des Wärmeabtransports zugunsten eines Transports einer größeren Wärmemenge in die weiter entfernt liegenden Bereiche der Antriebsvorrichtung und eines Transports einer kleineren Wärmemenge in die Bedien- und Griffoberflächen des umgebenden Gehäuses verändert wird.

Selbstverständlich ist in einer (nicht gezeigten) Modifikation auch eine Kombination der Ausführungsformen nach Fig. 4b und Fig. 4c möglich, in der die Wärmezwischenschicht 121 sowohl an der in Fig. 4b als auch an der in Fig. 4c gezeigten Position angeordnet ist, wodurch der Wärmetransport sowohl nach oben als auch nach unten maximiert werden kann.

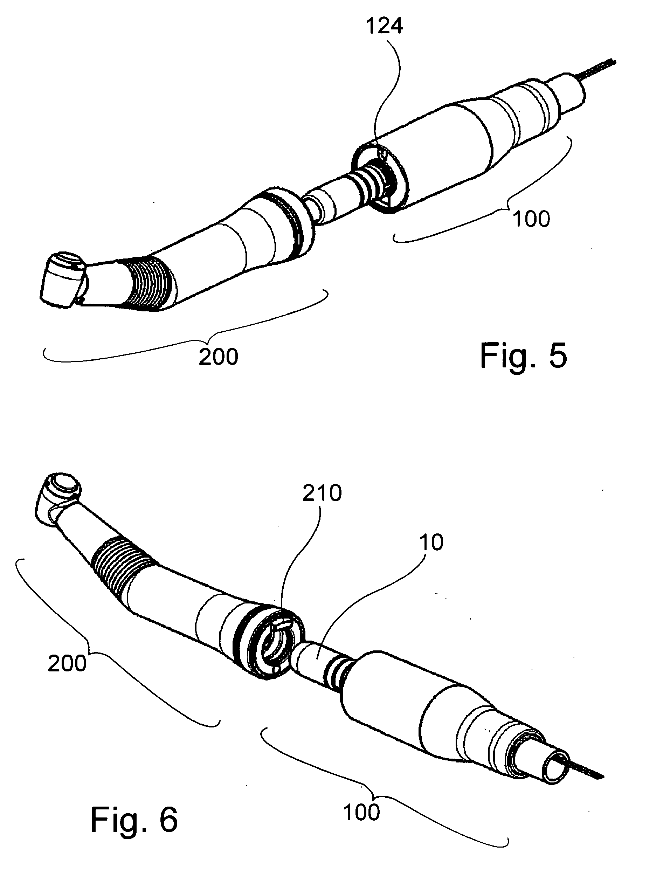

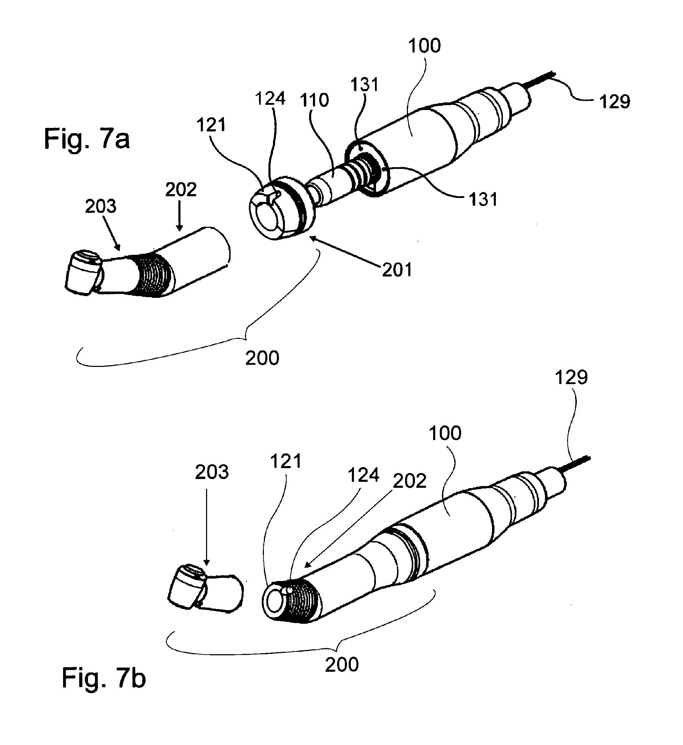

In Fig. 5 beziehungsweise Fig. 6 sind je in einer perspektivischen Ansicht der Einsatz der erfindungsgemäßen Antriebsvorrichtung 100 zusammen mit einem medizinischen oder zahnmedizinischen Instrument oder Handstück 200 gezeigt. Eine weitere Detaillierung insbesondere des Instrumentes beziehungsweise Handstückes 200 erfolgt in Fig. 7a, 7b. Das Instrument beziehungsweise Handstück 200 besitzt eine Öffnung, damit dieses auf die Kupplung 10 aufgeschoben werden kann. Mit Hilfe der Kupplung werden Antriebsmoment, aber auch Medien wie Licht, Gas, Druckluft, Flüssigkeiten, Strom, Energie usw. in den Mittelbeziehungsweise Kopfbereich des Handstückes geleitet. In der hier dargestellten erfindungsgemäßen Variante ist die Leuchtdiode 124 in der Antriebsvorrichtung 100 vorgesehen. In einem an dem Fußbereich des Handstückes 200 vorgesehenen Einkopplungsbereich 210 beginnt ein Lichtleitsystem, wie zum Beispiel Lichtfasern, um das von der Leuchtdiode 124 emmittierte Licht aufzunehmen und in den Kopfbereich zu leiten.

In Fig. 7a, 7b sind insbesondere zwei Varianten des erfindungsgemäßen medizinischen beziehungsweise zahnmedizinischen Instrumentes oder Handstückes gezeigt, welches auf einer Trägereinrichtung 121 eine Leuchtdiode 124 trägt.

Das Handstück 200 unterteilt sich dabei in einen Fußbereich 201, der insbesondere die Medienverbindung zu den jeweiligen Medienendkanälen an der Antriebsvorrichtung 100 aufweist.

Es schließt sich dann ein Mittelbereich 202 an, der das Zwischenstück zwischen dem Fußbereich 201 und dem Kopfbereich 203 bildet, an welchem das Werkzeug oder ähnliches angeordnet ist.

Der Aufbau der Trägereinrichtung 121 ist sehr variable. Er ist zum Beispiel derart ausgestaltet, wie in den Fig. 3, 4a bis 4c gezeigt.

In Fig. 7a ist die Trägereinrichtung 121 im Fußbereich 201 integriert und nützt dort den konisch in Richtung des Kopfbereiches 203 zusammenlaufenden Bereich aus. Hieraus resultiert eine sehr platzsparende Anordnung.

Zur besseren Übersichtlichkeit ist in der Zeichnung Fig. 7a beziehungsweise 7b das Instrument/Handstück 200 in seine jeweiligen Bereiche unterteilt dargestellt. Tatsächlich ist dieses natürlich im Einsatz zusammengesetzt beziehungsweise einstückig oder miteinander verbunden ausgeführt.

In Fig. 7b ist die Trägereinheit 121 mit der Leuchtdiode 124 im Mittelstück 202 vorgesehen, wobei bereits bei dieser Ausgestaltung auf ein weiteres Lichtleitsystem verzichtet werden kann, da im Einsatz bereits der Mittelbereich ebenfalls in den Mundraum gelangt und so eine Beleuchtung des Arbeitsfeldes ergibt.

Natürlich ist es möglich, auch wenn es hier nicht gezeigt ist, die Trägereinrichtung 121 mit der Leuchtdiode 124 im Kopfbereich 203 anzuordnen.

Um die im Fußbereich 201, Mittelbereich 202 oder Kopfbereich 203 angeordnete Leuchtdiode 124 mit Energie, insbesondere mit Strom, zu versorgen, sind auf der der Antriebsvorrichtung 100 zugewandten Abschlußseite des Fußbereiches 201 entsprechende (leider verdeckte) Energieleitungskontakte vorgesehen, die mit entsprechenden Energieleitungskontakten 131 an der Abschlußplatte der Antriebsvorrichtung 100 sinngemäß zusammenwirken. Dabei sind entsprechende Führungsnasen und Ausnehmungen in den zusammensteckbaren Elementen vorgesehen, um ein winkelgenaues Zusammenführen des Handstückes beziehungsweise Instrumentes 200 mit der Antriebsvorrichtung 100 sicherzustellen.

Es wird noch angemerkt, dass die Lichtabstrahleinrichtung 120 zusätzlich mit (nicht gezeigten) optischen Systemen für die Leuchtdiode 124 selbst, unterstützende Reflektoren und/oder Linsen und/oder Prismen versehen sein kann, um den Wirkungsgrad der Lichtabstrahleinrichtung 120 zu erhöhen, ohne hierauf beschränkt zu sein. Ferner brauchen das Abdeckelement bzw. die Abdeckelemente 125 nicht massiv ausgeführt zu sein, sondern können zur Abstimmung an einen jeweils angemessenen Wärmetransport in geeigneter Weise Ausnehmungen und Bohrungen aufweisen oder als geeignet geführte Wandungen ausgebildet sein, wodurch bei gleichzeitig ausreichender Wärmeableitung weiter vorteilhaft ein geringerer Materialeinsatz und ein geringeres Gewicht der Antriebsvorrichtung erzielbar sind.

Wie vorstehend beschrieben wurde, wird bereits durch die Verwendung einer Hochstrom-LED bzw. Power-LED die von der Lichtquelle erzeugte Wärmeleistung und damit die Wärmeentwicklung der Lichtabstrahleinrichtung 120 verringert. Die erforderliche Kühlung kann sodann ohne Kühlluftbohrungen auf passive Art und Weise durch Vorsehen ausreichend oder maximal großer Segmentflächen und mit wärmekontaktflächen an einer oberen Seite bzw. Oberseite über ein Wärmezwischenmaterial (TIM; "Thermal Interface Material") und/oder einer unteren Seite bzw. Rückseite über das Wärmezwischenmaterial auf dem IMS (Aluträger) erfolgen. Ein guter Wärmeübergang kann zudem mittels einer (nicht gezeigten) konstruktiven Lösung unter Verwendung einer Federvorspannung in einem zusätzlichen, separaten Bauteil oder, alternativ gleichwirkend, das Elastomerteil 127 erzielt werden. Wesentliche Vorteile resultieren in einer beträchtlichen Erhöhung der Lebensdauer der Lichtabstrahleinrichtung 120 und dem Wegfall von Wartungskosten und der Austauschbarkeit für einen Endanwender.

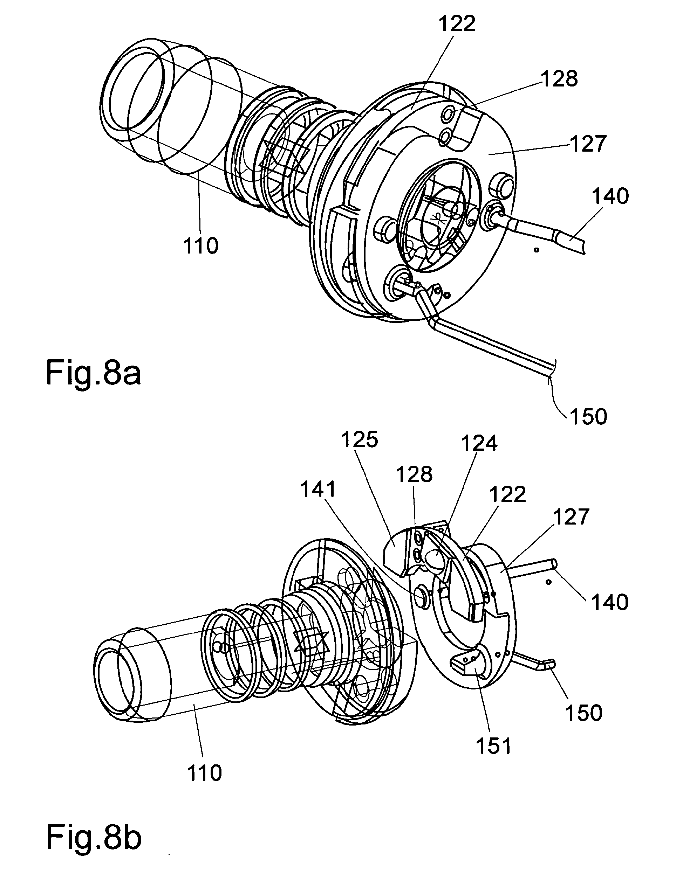

Die Fig. 8a bis 8c zeigen in Explosionsdarstellungen eine weitere Variante der Ausgestaltung einer Kupplungseinrichtung mit Lichtstrahleinrichtung und Medienanschlüssen nach der Erfindung. Bereits einmal vorgestellte Bezugszeichen werden in gleicher Weise wiederverwendet, wie in den bereits vorher gestellten Figuren. Im Unterschied zu den bereits vorgestellten Varianten der Erfindung ist hier, insbesondere in den Fig. 8a und 8b sehr gut ersichtlich eine Elastomerscheibe oder -platte 127 als Einrichtung zur Erzeugung einer Federvorspannung an der Kupplungseinrichtung 110 vorgesehen, die auf der einen Seite ein Medienrohr 140 aufweist, welches dort angeschlossen ist. Des Weiteren ist gegenüberliegend auch eine Flüssigkeitszufuhr 150 vorgesehen, die ebenfalls an der Elastomerscheibe oder - platte als Elastomerelement 127 angeordnet ist. Zwischen dem Elastomerelement 127 und dem Ende der Kupplungseinrichtung 110, die zum Anschluss eines weiteren Zwischenstückes oder Instrumentes dient, ist wieder der Träger 122 in den bereits beschriebenen Merkmalen angeordnet. Das Elastomerelement 127 ist zum Unterschied der bisher vorgestellten Varianten aus einem sterilisierbaren Silikon hergestellt und insbesondere mit federnden Eigenschaften versehen. Dadurch ist es möglich, einen ausreichenden Anpressdruck im zusammengefügten Zustand zu erzeugen, der ausreicht, um die gewünschte positive Wärmeabfuhr von der Leuchtdiode beziehungsweise Beleuchtungseinrichtung zu erhalten. Gleichzeitig wird durch die Ausgestaltung des Elastomerelementes 127 eine Abdichtung gegenüber Anbauteilen aus Kunststoff oder Stahl erhalten, die, wie bereits erwähnt, sowohl das Handstück 200 beziehungsweise dessen Fuß-201, Mittel- 202 oder Kopfbereich 203 sein können. Das ist aus den hier dargestellten Fig. 8a bis 8c nicht ersichtlich.

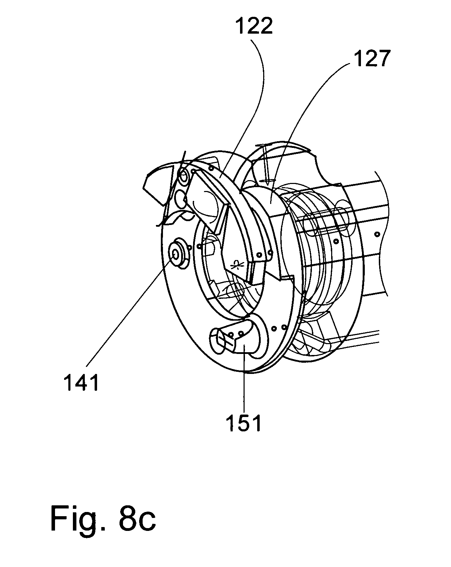

Insbesondere in Fig. 8b und 8c ist dargestellt, dass an dem Elastomerelement 127 eine Rücksaugstopvorrichtung 151 vorgesehen ist, die einen Rücksaugstop bei Abschaltung des Wasserdruckes erzeugt.

Des Weiteren ersichtlich ist, dass auch ein Medienrohranschluss 141 auf der dem Medienrohr 140 gegenüberliegenden Seite des Elastomerelementes 127 vorgesehen ist. In Fig. 8c sind die gleichen Elemente ebenfalls aus einer anderen Blickrichtung nochmals dargestellt.

Die jetzt mit der Anmeldung und später eingereichten Ansprüche sind Versuche zur Formulierung ohne Präjudiz für die Erzielung weitergehenden Schutzes.

Sollte sich hier bei näherer Prüfung, insbesondere auch des einschlägigen Standes der Technik, ergeben, daß das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist.

Es ist weiter zu beachten, daß die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die bislang nur in der Beschreibung offenbart wurden, können im Laufe des Verfahrens als von erfindungswesentlicher Bedeutung, zum Beispiel zur Abgrenzung vom Stand der Technik beansprucht werden.

Merkmale, die nur in der Beschreibung offenbart wurden, oder auch Einzelmerkmale aus Ansprüchen, die eine Mehrzahl von Merkmalen umfassen, können jederzeit zur Abgrenzung vom Stande der Technik in den ersten Anspruch übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Lichtabstrahleinrichtung für einen Antrieb medizinischer oder zahnmedizinischer Instrumente und/oder Handstücke, **gekennzeichnet durch**
- eine aus zumindest einer ersten Schicht und zumindest einer zweiten Schicht bestehende Trägereinrichtung (121, 122, 123, 125); und
- eine an einer in eine Lichtabstrahlrichtung weisenden Oberfläche der Trägereinrichtung (121, 122, 123, 125) angeordnete Leuchtdiode (124); wobei
- die zumindest eine erste Schicht der Trägereinrichtung (121, 122, 123, 125) eine Leiterschicht (123; 123, 128) zur Zufuhr von Energie zu der Leuchtdiode (124) beinhaltet; und
- die zumindest eine zweite Schicht der Trägereinrichtung (121, 122, 123, 125) eine Wärmeableitschicht (121, 123; 121, 122) zur Ableitung von Abstrahlungswärme der Leuchtdiode (124) beinhaltet.

2. Lichtabstrahleinrichtung nach Anspruch 1, **dadurch gekennzeichnet, dass** die Leuchtdiode (124) eine Hochstrom-Leuchtdiode bzw. Power-LED ist, die gesockelt und aus tauschbar oder fest verbaut vorgesehen ist und/oder die Leuchtdiode Licht mit gutem Wirkungsgrad und geringer Wärmeentwicklung erzeugt und/oder die Leiterschicht (123; 123, 128) der Trägereinrichtung (121, 122, 123, 125) aus Kupfer oder Dickkupfer besteht.

3. Lichtabstrahleinrichtung nach einem oder beiden der vorangehenden Ansprüche, **dadurch gekennzeichnet, dass** die Leiterschicht (123; 123, 128) eine maximale Fläche der Trägereinrichtung (121, 122, 123, 125) einnimmt und/oder die zumindest eine zweite Schicht (121) der Trägereinrichtung (121, 122, 123, 125) eine aus einer Wärmeleitpaste und/oder einem Wärmepastendruck und/oder einer Wärmeleitfolie bestehende Schicht ist und/oder auf der Wärmeableitschicht (121) zumindest ein Abdeckelement (125) aus einem Material mit hoher Wärmeleitfähigkeit angeordnet ist.

4. Lichtabstrahleinrichtung nach einem oder mehreren der vorangehenden Ansprüche, **dadurch gekennzeichnet, dass** die zumindest eine zweite Schicht (122) der Trägereinrichtung (121, 122, 123, 125) eine metallische Trägerschicht aus beispielsweise Aluminium, Kupfer, Stahl oder einer metallischen Legierung ist und/oder die zumindest eine zweite Schicht (122) der Trägereinrichtung (121, 122, 123, 125) mit einer Wärme leitenden Isolationsschicht (123) und einem Leiter (128), beispielsweise Kupfer, kaschiert ist und/oder die zumindest eine erste Schicht (122) der Trägereinrichtung (121, 122, 123, 125) in Lichtabstrahlrichtung unter der zumindest einen zweiten Schicht der Trägereinrichtung (121, 122, 123, 125) angeordnet ist.

5. Lichtabstrahleinrichtung nach einem oder mehreren der vorangehenden Ansprüche, **dadurch gekennzeichnet, dass** die zumindest eine erste Schicht der Trägereinrichtung (121, 122, 123, 125) eine Flammen hemmende Leiterplatte (122) aus Epoxydharz und Glasfasergewebe ist, auf die die Leiterschicht (123) zur elektrischen Kontaktierung (123, 128) der Leuchtdiode (124) aufgebracht ist und/oder die Leiterplatte (122) dicker als die Leiterschicht (123) ausgebildet ist und/oder sich die Leiterschicht (123, 128) mit Ausnahme von Unterbrechungen zur elektrischen Kontaktierung (128) der Leuchtdiode (124) über im Wesentlichen die gesamte Oberfläche der Trägereinrichtung (121, 122, 123, 125) erstreckt.

6. Lichtabstrahleinrichtung nach einem oder mehreren der vorangehenden Ansprüche, **dadurch gekennzeichnet, dass** die Wärmeableitschicht (121) auf Abschnitten der Leiterschicht (123) angeordnet ist, die nicht von der Leuchtdiode (124) und deren elektrischer Kontaktierung (128) belegt sind und/oder die Trägereinrichtung (121, 122, 123, 125) in Form einer flachen, ringförmigen Scheibenanordnung ausgebildet ist und die Wärmeableitschicht (121) und das zumindest eine Abdeckelement (125) die Oberfläche der scheibenringförmigen Trägereinrichtung (121, 122, 123, 125) derart abdecken, dass eine Ausnehmung (126) ausgebildet wird, in welcher die Leuchtdiode (124) und deren elektrischer Kontaktierung (128) angeordnet sind und/oder die zumindest eine zweite Schicht der Trägereinrichtung (121, 122, 123, 125) in Lichtabstrahlrichtung über der zumindest einen ersten Schicht der Trägereinrichtung (121, 122, 123, 125) angeordnet ist.

7. Lichtabstrahleinrichtung nach einem oder mehreren der vorangehenden Ansprüche, **dadurch gekennzeichnet, dass** die zumindest eine zweite Schicht der Trägereinrichtung (121, 122, 123, 125) in Lichtabstrahlrichtung unter der zumindest einen ersten Schicht der Trägereinrichtung (121, 122, 123, 125) angeordnet ist und sich über die gesamte Fläche der zumindest einen ersten Schicht erstreckt und/oder die Lichtabstrahleinrichtung in Lichtabstrahlrichtung gesehen beinhaltet:
- die Leiterplatte (122) aus Epoxydharz und Glasfasergewebe;
- die auf der Leiterplatte (122) angeordnete Leiterschicht (123; 123, 128);
- die auf der Leiterschicht (123) angeordnete Leuchtdiode (124);
- die in der Leiterschicht ausgeformte, zumindest eine Kontaktierung (128) aus einem leitenden Material zur Energieversorgung der Leuchtdiode (124);
- die auf der Leiterschicht (123) abschnittsweise angeordnete Wärmeableitschicht (121); und
- das auf der Wärmeableitschicht (121) aufliegende zumindest eine Abdeckelement (125).

8. Lichtabstrahleinrichtung nach einem oder mehreren der vorangehenden Ansprüche, **dadurch gekennzeichnet, dass** die Lichtabstrahleinrichtung in Lichtabstrahlrichtung gesehen beinhaltet:
- die metallische Trägerschicht (122);
- die auf die metallische Trägerschicht (122) kaschierte Isolationsschicht (123);
- den auf die metallische Trägerschicht (122) kaschierten Leiter (128);
- die auf dem Leiter (128) angeordnete und in dem Leiter (128) kontaktierte Leuchtdiode (124);
- die auf der Isolationsschicht (123) abschnittsweise angeordnete Wärmeableitschicht (121); und
- das auf der Wärmeableitschicht (121) aufliegende zumindest eine Abdeckelement (125)
oder die Lichtabstrahleinrichtung in Lichtabstrahlrichtung gesehen beinhaltet:
- die Wärmeableitschicht (121);
- die auf der Wärmeableitschicht (121) angeordnete metallische Trägerschicht (122);
- die auf die metallische Trägerschicht (122) kaschierte Isolationsschicht (123);
- den auf die metallische Trägerschicht (122) kaschierten Leiter (128);
- die auf dem Leiter (128) angeordnete und in dem Leiter (128) kontaktierte Leuchtdiode (124); und
- das auf dem Leiter (128) aufliegende zumindest eine Abdeckelement (125) und/oder zwischen dem Leiter (128) und dem auf dem Leiter (128) aufliegenden, zumindest einen Abdeckelement ebenfalls eine Wärmeableitschicht (121) vorgesehen ist.

9. Antriebsvorrichtung zum Antrieb medizinischer oder zahnmedizinischer Instrumente und/oder Handstücke, **gekennzeichnet durch**
- ein Gehäuse mit einem ersten Abschnitt eines ersten Volumens zur Aufnahme eines Antriebsmotors und einem zweiten Abschnitt eines zweiten Volumens zur Ankopplung eines **durch** den Antriebsmotor angetriebenen Instruments und/oder Handstücks; und
- eine Trägereinrichtung (121, 122, 123, 125) mit einer darauf angeordneten Leuchtdiode (124) zur Abstrahlung von Licht in Richtung auf einen Bereich in der Umgebung des Instruments oder Handstücks, wobei die Trägereinrichtung eine gute Wärmeankopplung zu dem Gehäuse und/oder Abschnitten desselben zur guten Ableitung von **durch** die Leuchtdiode erzeugter Wärme bereitstellt.

10. Antriebsvorrichtung nach Anspruch 9, **dadurch gekennzeichnet, dass** die Trägereinrichtung (121, 122, 123, 125) in Form einer ringförmigen Scheibe oder eines Segments derselben ausgebildet ist, deren bzw. dessen die Leuchtdiode (124) tragende Fläche sich im Wesentlichen rechtwinklig zur Längserstreckung der Rotationsachse des Antriebsmotors erstreckt und/oder das erste Volumen größer ist als das zweite Volumen oder das erste Volumen kleiner ist als das zweite Volumen.

11. Antriebsvorrichtung nach einem oder beiden der vorangehenden Ansprüche 9 und 10, **dadurch gekennzeichnet, dass** die Verwendung einer Lichtabstrahleinrichtung nach einem der Ansprüche 1 bis 8 vorgesehen ist und/oder zur Kühlung der aufgrund der Wärmeleistung der Leuchtdiode (124) erzeugten Wärmeabstrahlung an der Trägereinrichtung (121, 122, 123, 125) eine maximale Segmentfläche mit einer Wärmekontaktfläche an einer ersten Seite unter Verwendung eines Wärmeableitmaterials und/oder an einer zweiten Seite ein Wärmeableitmaterial auf einem isolierten Metallsubstrat vorgesehen sind und/oder zur Kühlung ein guter Wärmeübergang zu dem Gehäuse oder den Teilen desselben mittels einer Einrichtung zur Erzeugung einer Federvorspannung und/oder einem Elastomerelement (127) hergestellt wird.

12. Medizinisches oder zahnmedizinisches Instrument und/oder Handstück, **gekennzeichnet durch** eine Trägereinrichtung (121, 122, 123, 125) mit einer darauf angeordneten Leuchtdiode (124) zur Abstrahlung von Licht in Richtung auf einen Bereich in der Umgebung des Instruments oder Handstücks (200), wobei die Trägereinrichtung eine gute Wärmeankopplung zu dem Instrument- beziehungsweise Handstückgehäuse und/oder Abschnitten desselben zur guten Ableitung von **durch** die Leuchtdiode erzeugter Wärme bereitstellt.

13. Instrument beziehungsweise Handstück nach Anspruch 12, **dadurch gekennzeichnet, dass** die Trägereinrichtung (121, 122, 123, 125) in Form einer ringförmigen Scheibe oder eines Segments derselben ausgebildet ist, deren bzw. dessen die Leuchtdiode (124) tragende Fläche sich im Wesentlichen rechtwinklig zur Längserstreckung des Instrumenten- beziehungsweise Handstückgehäuses erstreckt und/oder die Verwendung einer Lichtabstrahleinrichtung nach einem der Ansprüche 1 bis 8 vorgesehen ist und/oder zur Kühlung der aufgrund der Wärmeleistung der Leuchtdiode (124) erzeugten Wärmeabstrahlung an der Trägereinrichtung (121, 122, 123, 125) eine maximale Segmentfläche mit einer Wärmekontaktfläche an einer ersten Seite unter Verwendung eines Wärmeableitmaterials und/oder an einer zweiten Seite ein Wärmeableitmaterial auf einem isolierten Metallsubstrat vorgesehen sind und/oder zur Kühlung ein guter Wärmeübergang zu dem Instrument- beziehungsweise Handstückgehäuse oder den Teilen desselben mittels einer Einrichtung zur Erzeugung einer Federvorspannung und/oder einem Elastomerelement (127) hergestellt wird.

14. Instrument beziehungsweise Handstück nach einem oder mehreren der vorhergehenden Ansprüche, **dadurch gekennzeichnet, dass** das Elastomerelement (127) federnde Eigenschaften aufweist, vorzugsweise aus einem insbesondere sterilisierbaren Silikon gebildet ist und gleichzeitig beziehungsweise zusätzlich eine Abdichtung gegenüber Anbauteilen, wie der Antriebsvorrichtung (100), dem Instrument beziehungsweise Handstück (200) oder dessen Fuss- (201), Mittel- (202) oder Kopfstück (203) bildet und/oder an dem Elastomerelement (127) wenigstens ein Medienrohr (140) mit gegebenenfalls innenliegenden Medienleitungen angeordnet oder an wenigstens einem Medienanschluss (141) anschliessbar ist und/oder an dem Elastomerelement (127) wenigstens eine Rücksaugstopvorrichtung (151) an wenigstens einer Flüssigkeitszufuhr (150) vorgesehen ist.

15. Instrument beziehungsweise Handstück nach einem oder mehreren der vorangehenden Ansprüche 12 bis 14, **dadurch gekennzeichnet, dass** die Trägereinrichtung an dem Instrument beziehungsweise Handstück (200) in dessen Fuß-(201), Mittel- (202) oder Kopfbereich (203) angeordnet ist und/oder im Fußbereich (201) des auswechselbaren Instruments/Handstückes (200) Energieleitungskontakte vorgesehen sind, über welche die Leuchtdiode (124), wenn das Instrument/Handstück (200) mit einem Handstückträger oder Antriebsvorrichtung verbunden ist, mit Energie versorgt wird.
